Europäisches Patentamt

European Patent Office

Office européen des brevets

(11) Publication number: **0 124 921**
**B1**

# EUROPEAN PATENT SPECIFICATION

(45) Date of publication of patent specification: **26.11.86**

(51) Int. Cl.⁴: **B 01 F 15/02, F 16 J 15/02**

(21) Application number: **84200442.6**

(22) Date of filing: **27.03.84**

(54) **Mixing apparatus, having a discharge flap provided with a sealing gasket.**

(30) Priority: **05.04.83 NL 8301190**

(43) Date of publication of application:
**14.11.84 Bulletin 84/46**

(45) Publication of the grant of the patent:
**26.11.86 Bulletin 86/48**

(84) Designated Contracting States:
**CH DE FR GB LI NL**

(56) References cited:
**DE-C- 961 586**

(73) Proprietor: **ISEM B.V.**
**Industriestraat 25**
**NL-7005 AN Doetinchem (NL)**

(72) Inventor: **De Vries, Jan Willem**
**Zandvoortweg 3**
**NL-7021 HM Zelhem (NL)**

(74) Representative: **den Boer, Jan Johannes, Ir.**
**et al**
**Octrooibureau Polak & Charlouis Laan Copes**
**van Cattenburch 80**
**NL-2585 GD The Hague (NL)**

## Description

The invention relates to a mixing apparatus, particularly for mixing of powdery material, comprising a container within which a helix rotor is driveably mounted, the container having one or more discharge apertures, each discharge aperture being closable by a plate shaped flap, which is pivotably mounted to the container and carries at its edge a sealing gasket extending along the complete flap circumference.

Such mixing apparatus are known. Therewith it is inevitable that powder settles on the gasket and coagulates there. If this occurs in irregular distribution along the flap circumference, the flap when closed will leak. Even if a powder cake of equal thickness would be present along the complete circumference, part thereof will chip off so that also therewith a leak will be generated.

The invention aims at removing this disadvantage. This is achieved by the invention in simple manner if the gasket is a plate shaped elastic strip, part of which projects beyond the flap circumference parallel to the plane of the flap plate when the flap is in open condition, the discharge aperture having an edge projecting outwardly substantially perpendicular to the container wall, the inner circumference of which substantially coincides with the flap circumference.

The portion of the gasket strip projecting beyond the flap circumference is folded by the perpendicular edge of the aperture when the flap is closed. Powder, which has entered through the gap between the discharge aperture and the flap circumference, that has settled on the gasket, chips off in that when the flap is opened, said projecting portion springs back to its flat condition due to the elasticity of the material. Even if powder would have remained on the gasket, this is wiped off when the projecting gasket portion slides along the perpendicular aperture edge which acts as a wiper when the flap is again closed. From DE—C—961.856 an annular sealing gasket for sealing a spigot connection between two tubes is known which gasket has a flat portion which in unconnected condition of the tubes extends radially from one tube and is folded inwardly by the socket part of the other tube when connecting said tubes. Thereby this gasket prevents the entering into the interior of the tubes of a potting compound further used for sealing the tube connection.

In order to have folding of the gasket portion according to the invention when the flap is closed take place gradually, whereby less wear of the gasket occurs, preferably the edge of the discharge aperture projecting outwardly perpendicular to the container wall is provided with a lead-in bevel or radius for the flap.

The gasket may easily be replaced if the plate shaped elastic gasket strip is clamped between the flap proper and a clamping plate or clamping strip secured thereto by means of screw bolts.

The invention will be further illustrated with reference to the drawing showing an embodiment of a mixing apparatus, having a discharge flap according to the invention.

Fig. 1 shows a schematic side view of a horizontal mixing apparatus.

Fig. 2 is a bottom view of the mixing apparatus according to figure 1.

Fig. 3 shows on an enlarged scale a bottom view of one of the flaps of the mixing apparatus.

Fig. 4 shows a section through a flap with which the device for actuating said flap is shown.

Fig. 5 shows the cross-section of the valve according to figure 4 on an enlarged scale.

The mixing apparatus as shown is a helical mixer of the horizontal type, comprising a container 1, which is stationary mounted and within which two ribbon shaped helixes 2, 3 are mounted on a shaft 4. The shaft is mounted in both end covers of the container through journals 5 and may be driven by an electromotor 6.

The mixer has two supply openings 7 at the upper side, as well as a man hole 8 and a spraying device 9 for, if desired, supplying water or a different liquid to the powdery product which has to be mixed.

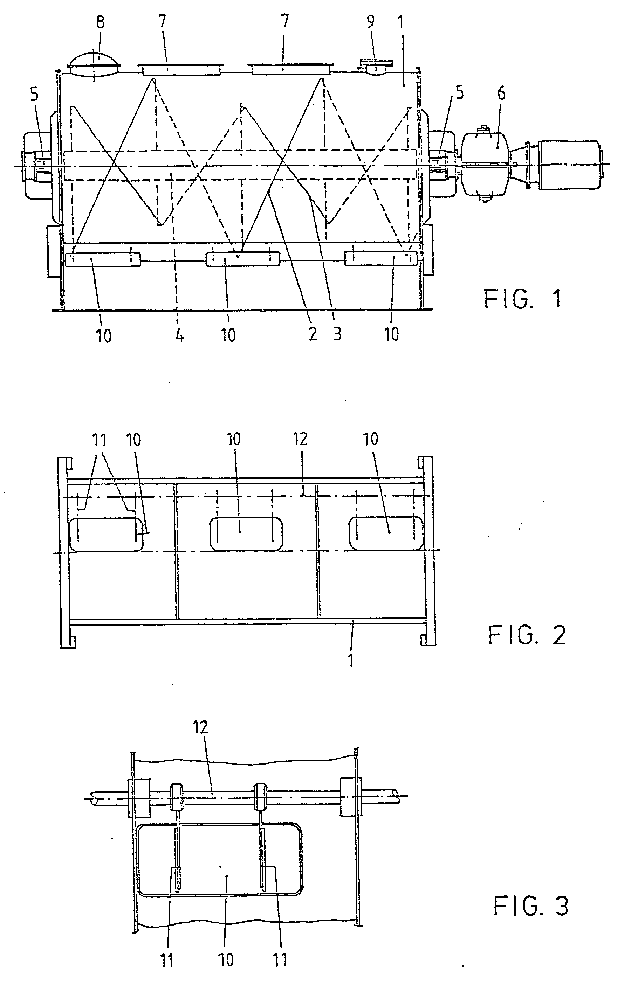

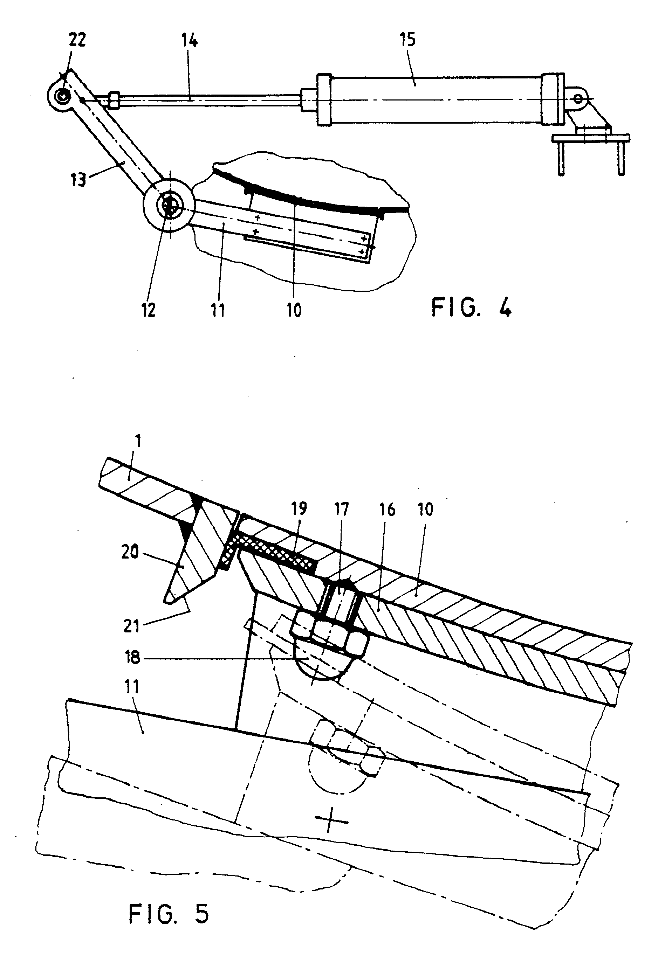

The mixing apparatus has discharge flaps 10 in the bottom, in this case three flaps. In figure 2 a bottom view of the mixing apparatus with its flaps is shown. As appears in more detail from figure 3 to each flap 10 two arms 11 are connected, the free end of which is journalled on a common drive shaft 12 for the flaps. This shaft is rotatable in a manner not further shown by hand or by means of a piston cylinder device, whereby the flaps may be moved between the closed position as shown and an open position. In the open position the powder that has been mixed in the mixing apparatus may leave the container through the flap apertures.

It is shown in Figure 4 that the shaft 12 is provided with a lever arm 13 to which the piston rod 14 of a piston cylinder device 15 is pivotably connected. By retracting the rod 14 within the cylinder 15 the flaps 10 are opened.

As appears in more detail from figure 5 each flap 10 comprises a plate which has a curvature corresponding to that of the cylinder wall of the mixing apparatus 1. Along the edge thereof a gasket 19 is clamped to the edge of the flap by means of a second plate 16 and of threaded rods 17 welded adjacent to the edge of the flap to the plate 10, and of the cap nuts 18. Said gasket 19 comprises a plate shaped strip which, when the flap is free from the flap aperture, projects with a terminal edge beyond the flap aperture, projects with a terminal edge beyond the flap parallel to the plane of the flap, such as is shown in phantom in figure 5. The flap aperture is defined by an edge 20 projecting outwardly perpendicular to the container wall, the inner circumference of said edge substantially coinciding with the flap circumference.

The gasket is manufactured from a material with such elasticity that it always returns to the position parallel to the flap plane when the flap is opened. Said material may be rubber or an elastic synthetic material, if necessary reinforced by spring metal strips, which are embedded in the material in the direction transverse to the longitudinal direction of the strip.

Preferably the perpendicular edge 20 at the side of the flap aperture is provided with a bevel 21 or radius whereby the gasket is gradually moved from its position parallel to the flap to the position perpendicular to the flap when the flap is closed, as far as related to the projecting portion thereof, whereby said portion engages the inner side of the edge 20 and seals therewith.

Any powder which has entered the gap between the flap and the container wall, which may stick to the gasket, again chips off therefrom when the flap is opened in that this portion returns to its stretched position.

It will be clear that the gasket may be connected to the flap, if not by the plate 16, by means of a strip-like edge which follows the flap circumference and likewise is secured by the bolts or rods as shown.

According to figure 4 the actuating lever 13 for the flap is provided with an eye 22. This may cooperate with a pin which is mounted slideable in its longitudinal direction in the wall of the mixing container 1, said pin engaging in the eye 22 when it is extended, e.g. by a piston cylinder device not shown and thereby locks the flaps 10 in their closed position. The actuation of the piston cylinder devices 14, 15 may be coupled to the piston cylinder device for said locking pin.

It will be clear that similar flaps as shown in the drawing, also may be provided on other types of mixing apparatus, e.g., conical mixing apparatus, in which likewise the sealing gasket according to the invention may be applied.

## Claims

1. A mixing apparatus, particularly for mixing of powdery material, comprising a container within which a helix rotor is drivably mounted, said container having one or more discharge apertures, each discharge aperture being closable by a plate shaped flap which is pivotably provided on the container, said flap having at its edge a sealing gasket extending along the complete flap circumference, characterized in that the gasket (19) is a plate shaped elastic strip, a portion of which projects parallel to the plane of the flap plate beyond the flap circumference when the flap (10) is in open position, the discharge aperture having an outwardly projecting edge (20) extending substantially perpendicular to the container wall (1), the inner circumference of said edge substantially coinciding with the flap circumference.

2. A mixing apparatus according to claim 1, characterized in that the edge (20) of the discharge aperture projecting outwardly perpendicular to the container wall (1) is provided with a lead-in bevel (21) or a radius for the flap (10).

3. Apparatus according to claim 1 or 2, characterized in that the plate shaped elastic gasket strip (19) is clamped between the flap (10) proper and a clamping plate (16) or clamping strip secured thereto by means of bolts (17, 18).

## Patentansprüche

1. Mischvorrichtung, insbesondere zur Mischung von pulverigen Materialen, bestehend aus einem Behälter innerhalb desselben ein schraublinienförmiger Rotor antreibbar montiert ist, welcher Behälter eine oder mehrere Auslassöffnungen aufweist, von welchen jede Auslassöffnung von einer plattenförmigen Klappe abschliessbar ist, welche Klappe schwenkbar am Behälter vorgesehen ist, und an ihrem Rand mit einer Abdichtpackung versehen ist, welche sich völlig ringsum des Klapenumfangs erstreckt, dadurch gekennzeichnet, dass die Packung (19) ein plattenförmiger elastischer Streifen ist, von welchem ein Teil parallel zur Ebene der Klappenplatte am Klappenumfang vorbei ausragt wenn die Klappe (10) sich in ihrer geöffneten Lage befindet, wobei die Auslassöffnung einen nach Aussen vorragenden Rand (20) aufweist, welcher nahezu senkrecht zur Behälterwand (1) verläuft, während der Innenumfang jenes Randes in der Hauptsache mit dem Klappenumfang zusammenfällt.

2. Mischvorrichtung nach Anspruch 1, dadurch gekennzeichnet, dass der Rand (20) der Auslassöffnung, welcher senkreicht zur Behälterwand (1) nach Aussen vorragt, mit einer Einführungsabschrägung (21) oder einem Radius für die Klappe (10) versehen ist.

3. Vorrichtung nach Anspruch 1 oder 2, dadurch gekennzeichnet, dass der plattenförmige elastische Packungsstreifen (19) zwischen der eigentlichen Klappe (10) und einer Klemmplatte (16) oder einem Klemmstreifen, daran mittels Bolzen (17, 18) befestigt, frestgeklemmt ist.

## Revendications

1 Appareil de mélange, particulièrement pour le mélange de substances poudreuses, comprenant un réservoir dans lequel un rotor hélicoidal est monté de façon à être actionné, ledit reservoir étant pourvu d'une ou plusieurs ouvertures de décharge, chaque ouverture de décharge étant fermable au moyen d'un volet en forme de plaque monté pivotablement sur le réservoir, ledit volet étant pourvu à son bord d'une garniture d'étanchéité s'étandant le long de la périphérie complète du volet, caractérisé en ce que le garniture (19) est une bande élastique en forme de plaque, une partie de laquelle s'étandant en parallel au plane de la plaque du volet au delà de la périphérie du volet quand le volet (10) se trouve dans la position ouverte, l'ouverture de décharge ayant un board (20) s'étandant en dehors de et environ perpendiculairment à la parois (1) du réservoir, la périphérie interne dudit bord coincidant substantiellement avec la périphérie du volet.

2. Appareil pour le mélange selon la revendication 1, caractérisé en ce que le bord (20) de l'ouverture de décharge s'étendant en dehors de et perpendiculairement à la paroi (1) du réservoir, est pourvu d'un chanfrein (21) de guidage ou d'un arrondissement pour le volet (10).

3. Appareil selon les revendications 1 ou 2, caractérisé en ce que la bande (19) de garniture élastique en forme de plaque est serrée entre le volet (10) propre et une plaque (16) de serrage ou bande de serrage, fixée au volet au moyen de boulons (17, 18).

0 124 921

FIG. 1

FIG. 2

FIG. 3

1

FIG. 4

FIG. 5